(19) Europäisches Patentamt
European Patent Office
Office européen des brevets

(11) Numéro de publication: **0 234 972**
**B1**

(12) **FASCICULE DE BREVET EUROPEEN**

(45) Date de publication du fascicule du brevet: **28.11.90**

(21) Numéro de dépôt: **87400085.4**

(22) Date de dépôt: **15.01.87**

(51) Int. Cl.⁵: **C 08 F 214/06** // (C08F214/06, 236:20)

(54) **Copolymères du chlorure de vinyle et procédé de préparation.**

(30) Priorité: **22.01.86 FR 8600876**
**15.10.86 FR 8614319**

(43) Date de publication de la demande:
**02.09.87 Bulletin 87/36**

(45) Mention de la délivrance du brevet:
**28.11.90 Bulletin 90/48**

(84) Etats contractants désignés:
**AT BE CH DE ES FR GB GR IT LI LU NL SE**

(56) Documents cités:
**US-A-3 025 280**

**J.Polymer Sci. Part C, No. 33, pp. 135-145 (1971)**

(73) Titulaire: **ATOCHEM**
**4 & 8, Cours Michelet La Défense 10**
**F-92800 Puteaux (FR)**

(72) Inventeur: **Grossoleil, Jacques**
**2 Impasse Lahoun Clos Montalibet**
**F-64300 Orthez (FR)**
Inventeur: **Kappler, Patrick**
**20, Allée Simon Saint-Jean**
**F-69130 Ecully (FR)**
Inventeur: **Krantz, Nicolas**
**14, Rue Gambetta**
**F-27300 Bernay (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne des copolymères du chlorure de vinyle. Elle concerne également un procédé de préparation desdits copolymères.

Il est connu de préparer des polymères du chlorure de vinyle de masse moléculaire élevée par polymérisation à température inférieure à 40°C (voir par exemple J. Polymer Sci. Part C, No 33, pp 135—145 (1971)). Cependant la polymérisation à température aussi faible entraîne des difficultés de régulation thermique, ce qui nécessité l'emploi d'une machine à froid.

Dans la présente description la masse moléculaire d'un polymère du chlorure de vinyle est évaluée par son indice de viscosité déterminé selon la norme internationale ISO 174.

Il à été proposé de préparer des copolymères du chlorure de vinyle de masse moléculaire élevée par polymérisation du chlorure de vinyle à température égale ou supérieure à 40°C en présence d'un composé polyfonctionnel. Par composé "polyfonctionnel" on entend, dans la présente description, un composé dont la molécule comporte au moins deux liaisons doubles éthyléniques. De nombreux composés polyfonctionnels ont été utilisés tels que, par exemple, le diallylphtalate, le diallyloxalate, le diallylsulfure, le diallyléther, le diallylmaléate, le triallylphosphate, le divinyléther, le polyalkylène glycol diméthacrylate, le polyéther glycol diméthacrylate, le polyester glycol diméthacrylate. Ainsi dans le brevet US 3 025 280, on a décrit un procédé de polymérisation en suspension du chlorure de vinyle en présence de diallyl éther. Cependant les copolymères obtenus présentent un taux pondéral de matière insouble dans le tétrahydrofurane généralement supérieur à 10% et pouvant atteindre 80%, ce qui rend leur mise en mise en oeuvre délicate. Il n'est notamment pas possible, à température de polymérisation égale ou supérieur à 40°C, à l'aide des composés polyfonctionnels utilisés jusqu'alors, d'obtenir des copolymères du chlorure de vinyle présentant à la fois un indice de viscosité supérieur à 250 ml/g et un taux pondéral de matière insoluble dans le tétrahydrofurane inférieur à 5%.

Les copolymères du chlorure de vinyle objet de l'invention comprennent un composition monomère à base de chlorure de vinyle et au moins un composé polyfonctionnel autre que l'un de ceux utilisés jusqu'alors.

Par l'expression "composition monomère à base de chlorure de vinyle" ou, plus brièvement, "composition monomère" on désigne, dans la présente description, le chlorure de vinyle seul on en mélange avec au moins un autre monomère copolymèrisable avec le chlorure de vinyle, à l'exclusion de tout composé polyfonctionnel. Ladite composition monomère contient au moins 50% en poids de chlorure de vinyle. Les monomères copolymèrisables sont ceux généralement employés dans les techniques classiques de copolymérisation de chlorure de vinyle. On peut citer les esters vinyliques des acides mono- et poly- carboxyliques, tels que acétate, propionate, benzoate de vinyle; les acides insaturés mono- et poly- carboxyliques, tels que acrylique, méthacrylique, maléique, fumarique, itaconique, ainsi que leurs esters aliphatiques, cycloaliphatiques, aromatiques, leurs amides, leurs nitriles; les halogénures d'allyle, de vinyle, de vinylidène; les alkylvinyléthers; les oléfines.

Dans la présente description, par polymère de chlorure de vinyle "correspondant" à un copolymère selon l'invention, on désigne tout polymère du chlorure de vinyle qui comprend exclusivement la même composition monomère que celle dudit copolymère selon l'invention et, éventuellement, au moins un composé polyfonctionnel choisi à volonté parmi ceux utilisés jusqu'alors.

Un but de l'invention est de fournir des copolymères du chlorure de vinyle présentant un indice de viscosité supérieur à celui des polymères du chlorure de vinyle correspondants préparés à température de polymérisation égale, voire moins élevée.

Un autre but de l'invention est de fournir un procédé permettant de préparer, à témperature de polymérisation égale, voire plus élevée, des copolymères du chlorure de vinyle présentant un indice de viscosité supérieure à celui des polymères du chlorure de vinyle correspondants.

Un autre but de l'invention est de fournir un procédé permettant de préparer des copolymères du chlorure de vinyle présentant à la fois un taux pondéral de matière insoluble dans la tétrahydrofurane inférieur à 5% et un indice de viscosité qui, à température de polymérisation de 45°C, est supérieur à 250 ml/g et, à température de polymérisation de 40°C, est supérieur à 270 ml/g.

D'autres buts et avantages de l'invention ressortent de la description suivante.

Selon l'invention le composé polyfonctionnel est un alcadiène de formule:

$$CH_2{=}CH{—}(CH_2)_x{—}CH{=}CH_2$$

dans laquelle x est un nombre entier de 1 à 25.

Selon l'invention les copolymères du chlorure de vinyle comprenent en moles de 99 à 99,99% et de préférence de 99,5 à 99,99% de ladite composition monomère à base de chlorure de vinyle de 0,01 à 1% et de préférence de 0,01 à 0,5% dudit composé polyfonctionnel.

A titre préférentiel le composé polyfonctionnel est le 1,9 décadiène.

Selon le procédé de préparation des copolymères du chlorure de vinyle objet de l'invention on réalise une polymérisation radicalaire de 99 à 99,99% et de préférence de 99,5 à 99,99% en moles d'une

composition monomère à base de chlorure de vinyle et de 0,01 à 1% et de préférence de 0,01 à 0,5% en moles d'au moins un alcadiène de formule:

$$CH_2=CH-(CH_2)_x-CH=CH_2$$

dans laquelle x est un nombre entier de 1 à 25.

Par polymérisation "radicalaire" on entend, dans la présente description, une polymérisation en présence d'un initiateur de polymérisation générateur de radicaux libres.

La température de polymérisation est généralement comprise entre 30 et 70°C et de préférence entre 35 et 55°C.

Toute technique connue de polymérisation radicalaire habituellement utilisée pour la préparation de polymères du chlorure de vinyle telle que polymérisation en suspension, en masse, en émulsion, en microsuspension peut être utilisée pour mettre en oeuvre le procédé de l'invention et notamment la polymérisation en suspension.

L'alcadiène peut être mis en oeuvre au début de la polymérisation et/ou au cours de la polymérisation, avant que le polymère formé représente 20% en poids du total polymère plus monomère(s). Il peut être mis en oeuvre en une seule fois ou par fraction successives ou en continu.

Un moyen de préparer un copolymère du chlorure de vinyle selon l'invention, par polymérisation en suspension, consiste à mettre en oeuvre un mélange réactionnel comprenant de l'eau, une composition monomère à base de chlorure de vinyle, l'alcadiène, un agent de stabilisation et au moins initiateur de polymérisation organosoluble. La quantité d'eau à mettre en oeuvre est telle que la teneur initiale en monomère(s) est généralement comprise entre 30 et 50%, en poids par rapport au mélange réactionnel. Le mélange réactionnel, soumis à agitation, est chauffé sous pression autogène et maintenu à la température de polymérisation choisie. Après la chute de pression la réaction est arrêtée et le ou les monomères non transformées sont dégazés.

Les agents de stabilisation peuvent être ceux habituellement utilisés dans la polymérisation en suspension du chlorure de vinyle, tels que, par exemple, l'alcool polyvinylique, les méthylcelluloses, les carboxycelluloses, les gélatines. Ils sout employés en quantité généralement comprise entre 0,05 et 1%, en poids par rapport aux monomères mis en oeuvre.

Les initiateurs de polymérisation organosolubles peuvent être ceux habituellement utilisés dans la polymérisation en suspension de chlorure de vinyle, tels que des peroxydes organiques comme le peroxyde de lauroyle, le peroxyde de benzoyle, le peroxyde d'acétylcyclohexanesulfonyle, le peroxyde d'isobutyroyle, le peroxyde de dichloracétyle, le peroxyde de trichloracétyle; des peroxydicarbonates comme le peroxydicarbonate d'éthyle, le peroxydicarbonate d'éthyle hexyle, le peroxydicarbonate d'isopropyle, le peroxydicarbonate d'isobutyle, le peroxydicarbonate de dicétyle; le perméthoxyacétate de tertiobutyle; le peréthoxyacétate de tertiobutyle; le perphénoxy-2- propionate de tertiobutyle. On utilise généralement 0,001 à 0,006%, en poids par rapport aux monomères mis en oeuvre, de l'initiateur ou des initiateurs exprimés en oxygène actif.

Les copolymères de chlorure de vinyle objet de l'invention, préparés par la technique de polymérisation en suspension, peuvent être séparés du milieu de polymérisation par tous procédés connus tels que filtration, essorage, décantation centrifuge, puis soumis à une opération de séchage suivie généralement d'une opération de tamisage destinée à isoler le produit noble défini comme passant à travers un tamis d'ouverture de mailles donnée.

Un moyen de préparer un copolymère du chlorure de vinyle selon l'invention, par polymérisation en masse, consiste à mettre en oeuvre une composition monomère à base de chlorure de vinyle, l'alcadiène et au moins un initiateur de polymérisation organosoluble et à réaliser la polymérisation en deux étapes effectuées dans des appareillages distincts, la première étape sous agitation de turbulence élevée jusqu'à ce que l'on obtienne un taux de transformation du ou des monomère(s) de 3 à 15%, la seconde étape sous vitesse d'agitation lente. On ajoute éventuellement à la composition monomère/polymère issue de la première étape une composition monomère complémentaire à base de chlorure de vinyle identique à ou différente de celle mise en oeuvre au cours de la première étape et un ou plusieurs initiateurs de polymérisation. Les deux étapes dites, pour la première, de prépolymérisation et, pour la seconde, de polymérisation finale ont lieu dans des appareillages appropriés dits prépolymériseurs et polymériseurs. A la fin de la seconde étape la réaction est arrêtée et le ou les monomère(s) non transformés sont dégazés.

Les initiateurs de polymérisation organsolubles peuvent être ceux habituellement utilisés dans la polymérisation en masse du chlorure de vinyle, tels que des peroxydes organiques comme le peroxyde de lauroyle, le peroxyde de benzoyle, le peroxyde d'acétylcyclohexanesulfonyle, le peroxyde d'isobutyroyle, le peroxyde de dichloracétyle, le peroxyde de trichloracétyle; des peroxydicarbonates comme le peroxydicarbonate d'éthyle, le peroxydicarbonate d'éthyle hexyle, le peroxydicarbonate d'isopropyle, le peroxydicarbonate d'isobutyle, le peroxydicarbonate de dicétyle; le perméthoxyacétate de tertiobutyle, le peréthoxyacétate de tertiobutyle; le perphénoxy-2-propionate de tertiobutyle. On utilise généralement 0,001 à 0,006%, en poids par rapport aux monomères mis en oeuvre, de l'initiateur ou des initiateurs exprimés en oxygène actif.

Après dégazage du ou des monomères non transformés les copolymères du chlorure de vinyle objet de l'invention, préparés par la technique de polymérisation en masse, sont généralement soumis à une opération de tamisage destinée à isoler le produit noble défini comme passant à travers un tamis

d'ouverture de mailles donnée.

Les copolymères du chlorure de vinyle objet de l'invention peuvent être utilisés à la place des polymères du chlorure de vinyle correspondants dans toutes les applications industrielles. Ils sont notamment applicables à la fabrication de feuilles, films, câbles électriques, corps creux, matériaux cellulaires, articles moulés par les techniques de calandrage, extrusion, extrusion-soufflage, injection ainsi qu'à la confection de revêtement enduits et articles moulés par toutes techniques de mise en oeuvre des plastisols et des organosols telles qu'enduction, moulage par rotation, trempage, projection. Les copolymères selon l'invention préparés par polymérisation en suspension sont notamment utilisables comme résines de charge pour la préparation des plastisols et des organosols. Les copolymères selon l'invention d'indice de viscosité supérieur à 200 ml/g permettant d'obtenir des articles présentant un aspect de surface mat.

On donne ci-après, à titre indicatif et non limitatif, plusieurs exemples de réalisation de l'invention.

Selon les exemples 1 à 15 les polymères sont préparés par polymérisation en suspension.

Selon les exemples 16 à 19 les polymères sont préparés par polymérisation en masse.

Les exemples 1, 5, 8, 10, 12, 13, 14, 15 et 16 sont donnés à titre comparatif.

Les exemples 2, 3, 4, 6, 7, 9, 11, 17, 18 et 19 sont selon l'invention.

Le produit noble est défini comme passant au tamis d'ouverture de mailles de 315 µm.

Le taux pondéral de matière insoluble dans le tétrahydrofurane d'un polymère à examiner est déterminé à l'aide de la méthode suivante:

Dans une cartouche SOXHLET de 60 ml de capacité on introduit un poids Po, d'environ 1,5 g, du polymère à examiner. Dans un erlenneyer de 500 ml de capacité associé à la cartouche SOXHLET on introduit 250 ml de tétrahydrofurane et, pour éviter la formation de peroxyde, 0,2 mg d'hydroquinone. Le tétrahydrofurane est chauffé à reflux pendant 48 heures de manière à réaliser une extraction toutes les 4 minutes. Après extraction la moitié du tétrahydrofurane est éliminée à l'aide d'un évaporateur rotatif puis la fraction du polymère dissoute dans le tétrahydrofurane dite "fraction du polymère soluble dans le tétrahydrofurane" est précipitée dans 300 ml de méthanol. On récupère ladite fraction du polymère sur verre fritté no 4, la sèche à l'étuve à 50°C pendant 2 heures, puis dans un dessicateur sous vide pendant 12 heures, puis détermine son poids P. Le taux pondéral de matière insoluble dans la tétrahydrofurane est donné par le rapport

$$\frac{Po - P}{Po}$$

exprimé en pourcentage.

L'indice de viscosité d'un polymère à examiner est déterminé selon la norme internationale ISO 174 sur la fraction du polymère soluble dans la tétrahydrofurane, après dissolution dans le tétrahydrofurane, précipitation dans le méthanol, récupération et séchage de ladite fraction dans les conditions indiquées ci-dessus.

Exemples 1 à 15

Dans un réacteur en acier inoxydable, de 25 litres de capacité, muni d'un agitateur de type "Pfaudler", on introduit 12 kg d'eau et 10,4 g d'alcool polyvinylique.

Après réglage de la vitesse d'agitation à 330 tr/min, mise en température à 30°C, fermeture et mise sous vide du réacteur, on introduit dans la réacteur 8 g de peroxydicarbonate de dicétyle, 7 kg de chlorure de vinyle et, le cas échéant, la quantité d'acétate de vinyle indiquée, pour chaque exemple, dans les tableaux 1 et 2.

Selon les exemples 1, 5, 8 et 10 ou n'introduit pas de composé polyfonctionnel.

Selon les exemples 2, 3, 6, 7, 9, 11, 12, 13, 14 et 15 on introduit également la quantité de composé polyfonctionnel indiquée, pour chaque exemple, dans les tableaux 1 et 2.

Selon les exemples 2, 3, 6, 7, 9 et 11 le composé polyfonctionnel est le 1,9 décadiène.

Selon les exemples 12, 13, 14 et 15 le composé polyfonctionnel est le diallylphtalate.

On porte le milieu réactionnel à la température de polymérisation choisie et maintient cette température pendant la durée de la polymérisation.

Selon l'exemple 4, lorsque le polymère formé représente 5 puis 10% en poids du total polymère plus monomère(s), on introduit une moitié puis l'autre moitié de la quantité du composé polyfonctionnel, le 1,9 décadiène, indiquée dans le tableau 1.

Lorsqu'on observe une baisse de pression de 1 bar, la polymérisation est considérée comme terminée. On dégaze alors le ou les monomères qui n'on pas réagi et sépare le polymère obtenu du milieu de polymérisation par essorage et séchage, puis isole le produit noble par tamisage.

Les tableaux 1 et 2 indiquent également pour chaque exemple:

la témperature de polymérisation,

la durée de polymérisation,

le taux de transformation de la totalité des monomères,

le taux de pondéral de produit noble,

ainsi que, déterminés sur la produit noble,

l'indice de viscosité,

le taux pondéral de matière insoluble dans le tétrahydrofurane.

| | Exemple comparatif 1 | Exemple selon l'invention 2 | Exemple selon l'invention 3 | Exemple selon l'invention 4 | Exemple comparatif 5 | Exemple selon l'invention 6 | Exemple selon l'invention 7 |
|---|---|---|---|---|---|---|---|
| Acétate de vinyle (g) | — | — | — | — | — | — | — |
| 1,9 décadiène (g) | — | 9,1 | 9,5 | 11,2 | — | 14,0 | 15,8 |
| Température de polymérisation (°C) | 45 | 45 | 45 | 45 | 52 | 52 | 52 |
| Durée de polymérisation (h) | 11 | 12 | 12 | 12 | 8 | 9 | 9 |
| Taux de transformation (%) | 80 | 84 | 80 | 83 | 72 | 86 | 79 |
| Taux pondéral de produit noble (%) | 97 | 98 | 98 | 98 | 98 | 99 | 98 |
| Indice de viscosité (ml/g) | 165 | 255 | 260 | 260 | 125 | 210 | 210 |
| Taux pondéral de matière insoluble dans le tétrahydrofurane (%) | 1 | 3 | 3 | 4 | 0 | 3 | 5 |

TABLEAU 2

| | Exemple comparatif 8 | Exemple selon l'invention 9 | Exemple comparatif 10 | Exemple selon l'invention 11 | Exemple comparatif 12 | Exemple comparatif 13 | Exemple comparatif 14 | Exemple comparatif 15 |
|---|---|---|---|---|---|---|---|---|
| Acétate de vinyle (g) | 210 | 210 | — | — | — | — | — | — |
| 1,9 décadiène (g) | — | 10,5 | — | 7,0 | — | — | — | — |
| Diallylphtalate (g) | — | — | — | — | 7,0 | 7,0 | 8,4 | 12,6 |
| Température de polymérisation (°C) | 45 | 45 | 40 | 40 | 43 | 40 | 40 | 40 |
| Durée de polymérisation (h) | 10 | 13 | 17 | 19 | 12 | 16 | 16 | 16 |
| Taux de transformation (%) | 84 | 84 | 80 | 79 | 76 | 80 | 81 | 80 |
| Taux pondéral de produit noble (%) | 97 | 99 | 97 | 95 | 97 | 95 | 92 | 88 |
| Indice de viscosité (ml/g) | 165 | 255 | 180 | 280 | 220 | 235 | 225 | 200 |
| Taux pondéral de matière insoluble dans le tétrahydrofurane (%) | 1 | 4 | 1 | 4 | 5 | 4 | 10 | 40 |

Des tableaux 1 et 2 il ressort que:

les copolymères du chlorure de vinyle préparés dans les exemples selon l'invention présentent un indice de viscosité supérieur à celui des polymères correspondants préparés à température de polymérisation égale, voire moins élevée, dans les exemples comparatifs.

le copolymère du chlorure de vinyle préparé à température de polymérisation de 45°C dans l'exemple 3 selon l'invention présente un indice de viscosité de 260 ml/g et un taux pondéral de matière insoluble dans le tétrahydrofurane de seulement 3%.

le copolymère du chlorure de vinyle préparé à température de polymérisation de 40°C dans l'exemple 11 selon l'invention présente un indice de viscosité de 280 ml/g et un taux pondéral de matière insoluble dans le tétrahydrofurane de seulement 4%.

le copolymère de chlorure de vinyle préparé à température de polymérisation de 40°C dans l'exemple 11 selon l'invention présente à la fois un indice de viscosité supérieur et un taux pondéral de matière insoluble dans le tétrahydrofurane inférieur ou au plus égal à celui des polymères correspondants préparés à la même température de polymérisation dans les exemples comparatifs 13, 14 et 15.

Exemples 16 à 19

Dans un prépolymériseur de 16 litres de capacité, en acier inoxydable, muni d'un agitateur constitué d'une turbine de type "Lightnin" on introduit 8 kg de chlorure de vinyle et purge l'appareil par dégazage de 0,8 kg de chlorure de vinyle. On introduit également 3 g de peroxydicarbonate d'éthyle hexyle et, le cas échéant, la quantité de 1,9 décadiène indiquée, pour chaque exemple, dans le tableau ci-après. La vitesse d'agitation est réglée à 700 tr/min.

On porte le milieu réactionnel à la température de 70°C et maintient cette température pendant la durée de prépolymérisation.

Après 15 minutes de prepolymérisation, le taux de transformation du ou des monomères étant voisin de 7%, le prepolymérisat et transféré dans un polymériseur vertical de 25 litres de capacité, en acier inoxydable, muni d'une double enveloppe, préalablement purgé par dégazage de 0,2 kg de chlorure de vinyle et contenant 4,2 kg de chlorure de vinyle, 2 g de peroxyde d'acétylcyclohexanesulfonyle et 4,5 g de peroxydicarbonate d'éthyle hexyle. On introduit dans le polymériseur, le cas échéant, la quantité de 1,9 décadiène indiquée, pour chaque exemple, dans le tableau ci-après. Le polymériseur est muni d'un agitateur constitué par un ruban enroulé en spires hélicoïdales sur un arbre rotatif traversant la partie supérieure du polymériseur selon son axe et solidaire, à son extrémité inférieure, d'un bras épousant la forme du fond bombé du polymériseur. La vitesse d'agitation est réglée à 70 tr/min.

On porte le milieu réactionnel à la température de 56°C et maintient cette température pendant la durée de polymérisation.

Après polymérisation et dégazage du ou des monomères qui n'ont pas réagi on isole le produit noble par tamisage.

Le tableau 3 ci-après indique également pour chaque exemple:

la durée de polymérisation dans le polymériseur,

le taux de transformation de la totalité des monomères,

le taux pondéral de produit noble,

ainsi que, déterminés sur le produit noble,

l'indice de viscosité,

le taux pondéral de matière insoluble dans le tétrahydrofurane.

TABLEAU 3

| | Exemple comparatif 16 | Exemple selon l'invention 17 | Exemple selon l'invention 18 | Exemple selon l'invention 19 |
|---|---|---|---|---|
| 1,9 décadiène introduit dans le prépolymériseur (g) | — | 34,2 | — | — |
| 1,9 décadiène introduit dans le polymériseur (g) | — | — | 28,5 | 34,2 |
| Durée de polymérisation dans le polymériseur (h) | 3,5 | 4 | 4 | 4 |
| Taux de transformation (%) | 77 | 74 | 69 | 72 |
| Taux pondéral de produit noble (%) | 94 | 95 | 88 | 90 |
| Indice de viscosité (ml/g) | 108 | 203 | 172 | 185 |
| Taux pondéral de matière insoluble dans le tétrahydrofurane (%) | 0 | 4 | 1 | 2 |

**Revendications**

1. Copolymères du chlorure de vinyle comprenant une composition monomère à base de chlorure de vinyle et au moins un composé polyfonctionnel caractérisés par le fait que ledit composé polyfonctionnel est un alcadiène de formule:

$$CH_2{=}CH{-}(CH_2)_x{-}CH{=}CH_2$$

dans laquelle x est un nombre entier de 1 à 25 et que lesdits copolymères comprennent en moles de 99 à 99,99% et de préférence de 99,5 à 99,99% de ladite composition monomère à base de chlorure de vinyle et de 0,01 à 1% et de préférence de 0,01 à 0,5% dudit composé polyfonctionnel.

2. Copolymères selon la revendication 1, caractérisé par le fait que le composé polyfonctionnel est le 1,9 décadiène.

3. Procédé de préparation des copolymères selon l'une quelconque des revendications 1 et 2, caractérisé par le fait que l'on réalise une polymérisation radicalaire de 99 à 99,99% et de préférence de 99,5% à 99,99% en moles d'une composition monomère à base de chlorure de vinyle et de 0,01 à 1% et de préférence de 0,01 à 0,5% en moles d'au moins un alcadiène de formule:

$$CH_2{=}CH{-}(CH_2)_x{-}CH{=}CH_2$$

dans laquelle x est un nombre entier de 1 à 25.

4. Procédé selon la revendication 3, caractérisé par le fait que l'alcadiène est mis en oeuvre au début de la polymérisation.

5. Procédé selon la revendication 3, caractérisé par le fait que l'alcadiène est mis en oeuvre au cours de la polymérisation, avant que le polymère formé représente 20% en poids du total polymère plus monomère(s).

6. Procédé selon l'une quelconque des revendications 3 à 5, caractérisé par le fait que la polymérisation est réalisée en suspension.

7. Procédé selon la revendication 6, caractérisé par le fait que l'on met en oeuvre un mélange réactionnel comprenant de l'eau, une composition monomère à base de chlorure de vinyle, l'alcadiène, un agent de stabilisation et au moins un initiateur de polymérisation organosoluble et que le mélange réactionnel, soumis à agitation, est chauffé sous pression autogène.

8. Procédé selon l'une quelconque des revendications 3 à 5, caractérisé par le fait que la polymérisation est réalisée en masse.

9. Procédé selon la revendication 8, caractérisé par le fait que l'ou met en oeuvre une composition monomère à base de chlorure de vinyle, l'alcadiène et au moins un initiateur de polymérisation organosoluble et que l'on réalise la polymérisation en deux étapes, effectuées dans des appareillages

distincts, la première étape sous agitation de turbulence élevée jusqu'à ce que l'on obtienne un taux de transformation du ou des monomère(s) de 3 à 15%, la seconde étape sous vitesse d'agitation lente.

10. Procédé selon la revendication 9, caractérisé par le fait que l'on ajoute à la composition monomère/polymère issue de la première étape une composition monomère complémentaire à base de chlorure de vinyle identique à ou différente de celle mise en oeuvre au cours de la première étape et un ou plusieurs initiateurs de polymérisation.

11. Procédé selon l'une quelconque des revendications 3 à 5, caractérisé par le fait que la polymérisation est réalisée en émulsion.

12. Procédé selon l'une quelconque des revendications 3 à 5, caractérisé par le fait que la polymérisation est réalisée en microsuspension.

**Patentansprüche**

1. Copolymere von Vinylchlorid umfassend einen Monomerenansatz auf der Basis von Vinylchlorid und mindestens eine polyfunktionelle Verbindung, dadurch gekennzeichnet, daß die polyfunktionelle Verbindung ein Alkadien der Formel

$$CH_2{=}CH{-}(CH_2)_x{-}CH{=}CH_2$$

ist, in der x eine ganze Zahl von 1 bis 25 bedeutet, und daß die Copolymere 99 bis 99,99 mol-%, vorzugsweise 99,5 bis 99,99 mol-%, des genannten Monomerenansatzes auf der Basis von Vinylchlorid und 0,01 bis 1 mol-%, vorzugsweise 0,01 bis 0,5 mol-%, der genannten polyfunktionellen Verbindung umfassen.

2. Copolymere nach Anspruch 1, dadurch gekennzeichnet, daß die polyfunktionelle Verbindung das 1,9-Decadien ist.

3. Verfahren zur Herstellung der Copolymeren nach einem der Ansprüche 1 und 2, dadurch gekennzeichnet, daß man eine radikalische Polymerisation durchführt mit 99 bis 99,99 mol-%, vorzugsweise mit 99,5 bis 99,99 mol-%, eines Monomerenansatzes auf der Basis von Vinylchlorid und mit 0,01 bis 1 mol-%, vorzugsweise 0,01 bis 0,5 mol-%, mindestens eines Alkadiens der Formel

$$CH_2{=}CH{-}(CH_2)_x{-}CH{=}CH_2,$$

in der x eine ganze Zahl von 1 bis 25 ist.

4. Verfahren nach Anspruch 3, dadurch gekennzeichnet, daß das Alkadien zu Beginn der Polymerisation eingesetzt wird.

5. Verfahren nach Anspruch 3, dadurch gekennzeichnet, daß das Alkadien im Verlauf der Polymerisation eingesetzt wird, bevor das entstandene Polymere 20 Gew.-% der Gesamtmenge aus Polymerem und Monomerenansatz ausmacht.

6. Verfahren nach einem der Ansprüche 3 bis 5, dadurch gekennzeichnet, daß die Polymerisation in Suspension durchgeführt wird.

7. Verfahren nach Anspruch 6, dadurch gekennzeichnet, daß man ein Reaktionsgemisch bestehend aus Wasser, einem Monomerenansatz auf der Basis von Vinylchlorid, dem Alkadien, einem Stabilisator und mindestens einem organolöslichen Polymerisationsinitiator einsetzt und daß man das Reaktionsgemisch, während gerührt wird, unter autogenem Druck erhitzt.

8. Verfahren nach einem der Ansprüche 3 bis 5, dadurch gekennzeichnet, daß man die Polymerisation in der Masse durchführt.

9. Verfahren nach Anspruch 8, dadurch gekennzeichnet, daß man einen Monomerenansatzt auf der Basis von Vinylchlorid, das Alkadien und mindestens einen organolöslichen Polymerisationsinitiator einsetzt und die Polymerisation in zwei Stufen, in zwei getrennten Apparaturen durchführt, die erste Stufe unter starkem turbulenten Rühren bis zu einen Umwandlungsgrad des oder der Monomeren von 3 bis 15% und die zweite Stufe bei langsamer Rührgeschwindigkeit.

10. Verfahren nach Anspruch 9, dadurch gekennzeichnet, daß man dem in der ersten Stufe erhaltenen Gemisch aus Monomerenansatz und Polymeren einen zusätzlichen Monomerenansatz auf der Basis von Vinylchlorid zusetzt, der identisch ist mit oder verschieden ist von dem in der ersten Stufe eingesetzten Monomerenansatz, sowie einen oder mehrere Polymerisationsinitiatoren.

11. Verfahren nach einem der Ansprüche 3 bis 5, dadurch gekennzeichnet, daß die Polymerisation in Emulsion durchgeführt wird.

12. Verfahren nach einem der Ansprüche 3 bis 5, dadurch gekennzeichnet, daß die Polymerisation in Mikrosuspension durchgeführt wird.

## Claims

1. Vinyl chloride copolymers comprising a vinyl chloride-based monomer composition and at least one polyfunctional compound, characterized in that the said polyfunctional compound is an alkadiene of formula:

$$CH_2=CH—(CH_2)_x—CH=CH_2$$

in which x is an integer from 1 to 25 and that the said copolymers comprise, on a molar basis, from 99 to 99.99% and preferably from 99.5 to 99.99% of the said vinyl chloride-based monomer composition and from 0.01 to 1% and preferably from 0.01 to 0.5% of the said polyfunctional compound.

2. Copolymers according to Claim 1, characterized in that the polyfunctional compound is 1,9-decadiene.

3. Process for the preparation of the copolymers according to either of Claims 1 and 2, characterized in that there is performed a radical polymerization of 99 to 99.99% and preferably of 99.5 to 99.99 mol% of a vinyl chloride-based monomer composition and of 0.01 to 1% and preferably of 0.01 to 0.5 mol% of at least one alkadiene of formula:

$$CH_2=CH—(CH_2)_x—CH=CH_2$$

in which x is an integer of from 1 to 25.

4. Process according to Claim 3, characterized in that the alkadiene is introduced at the beginning of the polymerization.

5. Process according to Claim 3, characterized in that the alkadiene is introduced during the polymerization, before the polymer formed represents 20% by weight of the total of polymer plus monomer(s).

6. Process according to any one of Claims 3 to 5, characterized in that the polymerization is carried out in suspension.

7. Process according to Claim 6, characterized in that a reaction mixture is used, comprising water, a vinyl chloride-based monomer composition, the alkadiene, a stabilizing agent and at least one organosoluble polymerization initiator and that the reaction mixture, subjected to stirring, is heated under autogenous pressure.

8. Process according to any one of Claims 3 to 5, characterized in that the polymerization is carried out in bulk.

9. Process according to Claim 8, characterized in that a vinyl chloride-based monomer composition, the alkadiene and at least one organosoluble polymerization initiator are used and the polymerization is carried out in two stages, performed in separate units of apparatus, the first stage with high turbulence stirring until a degree of conversion of the monomer(s) of 3 to 15% is obtained, the second stage at a slow stirring speed.

10. Process according to Claim 9, characterized in that an additional vinyl chloride-based monomer composition which is identical with or different from that introduced during the first stage and one or more polymerization initiators are added to the monomer/polymer composition originating from the first stage.

11. Process according to any one of Claims 3 to 5, characterized in that the polymerization is carried out in emulsion.

12. Process according to any one of Claims 3 to 5, characterized in that the polymerization is carried out in microsuspension.